# EUROPEAN PATENT APPLICATION

(11) **EP 3 547 734 A1**
(43) Date of publication of application: **02.10.2019**
(21) Application number: 18165311.4
(22) Date of filing: 30.03.2018
(51) Int. Cl.: H04W 12/06, H04L 9/32, H04L 29/06

(54) **AUTHENTICATION FOR A COMMUNICATION SYSTEM**

(71) Applicant: Koninklijke KPN N.V., 3072 AP Rotterdam (NL)
(72) Inventor: Teng, Song, 2553 DC The Hague (NL); Moustakas, Nikos, 2632 AK Nootdorp (NL)
(74) Representative: Wuyts, Koenraad Maria

(57) **Abstract**

A method to authenticate a communication device (110) for a communication network (100), the authentication method comprising a registration part and a use part, wherein the registration part comprises
- establishing a connection between the communication device (110) and a primary authentication system (210), the communication device (110) and the primary authentication system (210) having a shared secret key (112),
- authenticating the communication device (110) to the primary authentication system (210) through a challenge response protocol depending on the key (112).
- generating at the communication device (110) a key-pair having a public key and a private key, and computing a public address from the public key,
- sending the public address to a secondary authentication system (220) by the primary authentication system (210).

## Description

### FIELD OF THE INVENTION

The invention relates to a method to authenticate a communication device for a communication network, a communication device, a primary authentication system, a secondary authentication system, a network element, and a computer readable medium.

### BACKGROUND

US Patent 8023485, "Method, system and device for realizing user identity association" (included herein by reference) discloses embodiments for realizing user identity association, so that IMPUs with the equivalent behavior can be associated.

For example, the known method for realizing user identity comprises setting an equivalent behavior user identifier in an HSS; and associating IMS Public User Identities (IMPUs) with the equivalent behavior through the set equivalent behavior user identifier. The HSS is adapted to associate IMPUs with equivalent behavior and to transmit association information of the IMPUs with the equivalent behavior to a first requesting entity by carrying the information in a message. Equivalent behavior user identifier may thus be set in the HSS and associate the IMPUs with the set equivalent behavior user identifier.

Several drawbacks are associated with the known method. For example, there is a desire that other parties can perform authentication functions, without requiring this to be linked to the HSS. Likewise, there is a need for a reliable mechanism to record or communicate this information. Moreover, there is a need to allow independent behaviors to be set up for different identities.

### SUMMARY OF THE INVENTION

These and other issues are addressed in a method to authenticate a communication device for a communication network. The invention is defined by the independent claims; the dependent claims define advantageous embodiments. In an embodiment, the authentication method comprises a registration part and a use part.

The registration part may comprise
- establishing a connection between the communication device and a primary authentication system, the communication device and the primary authentication system having a shared secret key,
- authenticating the communication device to the primary authentication system through a challenge response protocol depending on the key,
- generating at the communication device a key-pair having a public key and a private key, and computing a public address from the public key.
- sending the public address to a secondary authentication system by the primary authentication system.
The use part may comprise
- establishing a connection between the communication device and a network element of the communication network,
- sending the public address from the communication device to the network element
- validating the public address at the secondary authentication system
- generating a challenge for the communication device,
- responding by the communication device to the challenge with a response computed from the challenge and the private key.

The method allows authentication to be delegated to one or more secondary authentication systems. Initially authentication proceeds with a primary authentication system. For example, this may be done using any of the known methods in the art. For example, the communication device 110 may have a secret key which is also known by the primary authentication system. The primary authentication system and the communication device can then engage in an authentication protocol based on the shared secret. For example, they can perform a challenge-response protocol, in which a party proves knowledge of the secret key by performing a cryptographic computation that requires access to the secret key, and which can be verified by the other party with the secret key. The cryptographic computation may, e.g., be an encryption, decryption, MAC, etc.

It is not desired to share the secret key among more parties than is necessary. In particular, it is not desired that the secret key is shared with the secondary authentication system. A communication device according to an embodiment generates a public/private key pair and computes a public address from the public key. The latter is shared with the secondary authentication system by the primary authentication system. Accordingly, the secondary authentication system can link the fact that the communication device has been authenticated by the primary device, at least once, to the public address. The primary authentication system can record the public address in addition to the device identifier, and the secondary authentication system can record the device identifier in addition to the public address; either one is convenient but not required. For example, the secondary authentication device may use knowledge of the device identifier for billing purposes, or to terminate the public address in case the primary authorization is withdrawn.

Once the public address is known to the secondary authentication device, authentication can, at least in part, be performed by the secondary authentication device. In particular, the authentication device can validate that a particular public address is associated with a communication device that in the past has been authenticated by a primary authentication device. Interestingly, knowledge of the public address is sufficient to create a challenge for the communication device, and to verify that a response to the challenge is correct. In particular, the response may comprise the public key and the result of a cryptographic operation that requires the private key, e.g., a decryption or a signature.

An advantage of using a distributed ledger is that there is no need for an offline key distribution. Using an alternate set of keys also improves privacy. For example, the private key may always remain within the communication device.

Embodiments may be applied in various circumstances. For example, in transportation, e.g., using widely distributed stations and devices, there are a lot of requirements for exchange of information. Authorization of the devices can be more efficiently done by the industrial company itself rather than via the exchange of information with the operator. For example, the authorization of vehicles, containers and such equipment can be more efficiently done by the logistic company due to the international nature of trade.

For example, in a medical environment a lot of information needs to be exchanged, among others between: medical devices, patient beds, critical equipment, etc. Wired communication is not suited for all cases. In an embodiment, authorization of these devices and management of accounts may be done by an external party, e.g., a hospital, even though the communication network is provided by a telecom operator. For example, in smart cities, embodiments may be used for maintenance of streets, public parks, garbage management, etc. For example, for garbage management information needs to be gathered and processed. For life cycle management reasons, the local government agencies are able to better manage the devices than an operator.

In an embodiment, the system uses a distributed ledger to record at least one of the initial authentications of the primary and secondary authentication system. In an embodiment further authentication and/or other operations relating to the communication device may also be recorded in the same or a different distributed ledger.

For example, in an embodiment, the method may comprise
- generating a transaction comprising the public address, and sending the transaction to a ledger management device, the ledger management device generating a new block for inclusion in a distributed ledger, which new block comprises the public address,
- the secondary authentication system receiving the block, and retrieving the public address from the block
   For example, in an embodiment, the method may comprise (possibly additionally or instead)
- generating by the secondary authentication system a transaction comprising the public address, and sending the transaction to a ledger management device, the ledger management device generating a new block for inclusion in a distributed ledger, which new block comprises the public address.

Further aspects of the invention include a communication network, communication system, a communication device, a primary authentication system, a secondary authentication system, a network element, and a computer readable medium. The device and systems are electronic devices and systems. The system may be implemented as a single device or as multiple cooperating devices. The communication device may be a mobile communication device, e.g., a mobile phone. The communication device may be installed in other devices such as a set-top box, a computer, and the like.

The authentication method described herein may be applied in a wide range of practical applications. For example, the method may be used to allow a third party to perform its own authentication management without having to set up its own primary authentication system. For example, a large company may buy multiple mobile phones, and/or multiple mobile phone subscriptions, and maintain a secondary authentication system. The company is thus enabled to perform its own management of the communication devices without having to set up its own primary authentication system or mobile network. This allows full freedom for the company to impose its own rules for authentication and thus access to the communication network. The method may also be used to generate additional secondary identities for devices which are associated with a mobile communication device, e.g., watches, sensors, wearable electronics and the like. These accessories are thus enabled for independent communication without having to use the device identifier of the main communication device, e.g., a phone.

A method according to the invention may be implemented on a computer as a computer implemented method, or in dedicated hardware, or in a combination of both. Executable code for a method according to the invention may be stored on a computer program product. Examples of computer program products include memory devices, optical storage devices, integrated circuits, servers, online software, etc. Preferably, the computer program product comprises non-transitory program code stored on a computer readable medium for performing a method according to the invention when said program product is executed on a computer.

In a preferred embodiment, the computer program comprises computer program code adapted to perform all the steps of a method according to the invention when the computer program is run on a computer. Preferably, the computer program is embodied on a computer readable medium. Another aspect of the invention provides a method of making the computer program available for downloading.

### BRIEF DESCRIPTION OF THE DRAWINGS

Further details, aspects, and embodiments of the invention will be described, by way of example only, with reference to the drawings. Elements in the figures are illustrated for simplicity and clarity and have not necessarily been drawn to scale. In the Figures, elements which correspond to elements already described may have the same reference numerals. In the drawings,
Figure 1a schematically shows an example of an embodiment of a communication device,
Figure 1b schematically shows an example of an embodiment of a primary authentication system,
Figure 1c schematically shows an example of an embodiment of a network element,
Figure 1d schematically shows an example of an embodiment of a secondary authentication device,
Figure 2 schematically shows an example of an embodiment of a communication system,
Figure 3a schematically shows an example of an embodiment of a blockchain,
Figure 3b schematically shows an example of an embodiment of a hashgraph.
Figure 3c schematically shows an example of an embodiment of a blockchain,
Figure 4a schematically shows an example of an embodiment of a registration part of a method to authenticate a communication device for a communication network,
Figure 4b schematically shows an example of an embodiment of a use part of a method to authenticate a communication device for a communication network,
Figure 5a schematically shows a computer readable medium having a writable part comprising a computer program according to an embodiment,
Figure 5b schematically shows a representation of a processor system according to an embodiment.

### DETAILED DESCRIPTION OF PREFERRED EMBODIMENTS

While this invention is susceptible of embodiment in many different forms, there are shown in the drawings and will herein be described in detail one or more specific embodiments, with the understanding that the present disclosure is to be considered as exemplary of the principles of the invention and not intended to limit the invention to the specific embodiments shown and described.

In the following, for the sake of understanding, elements of embodiments are described in operation. However, it will be apparent that the respective elements are arranged to perform the functions being described as performed by them.

Further, the invention is not limited to the embodiments, and the invention lies in each and every novel feature or combination of features described herein or recited in mutually different dependent claims.

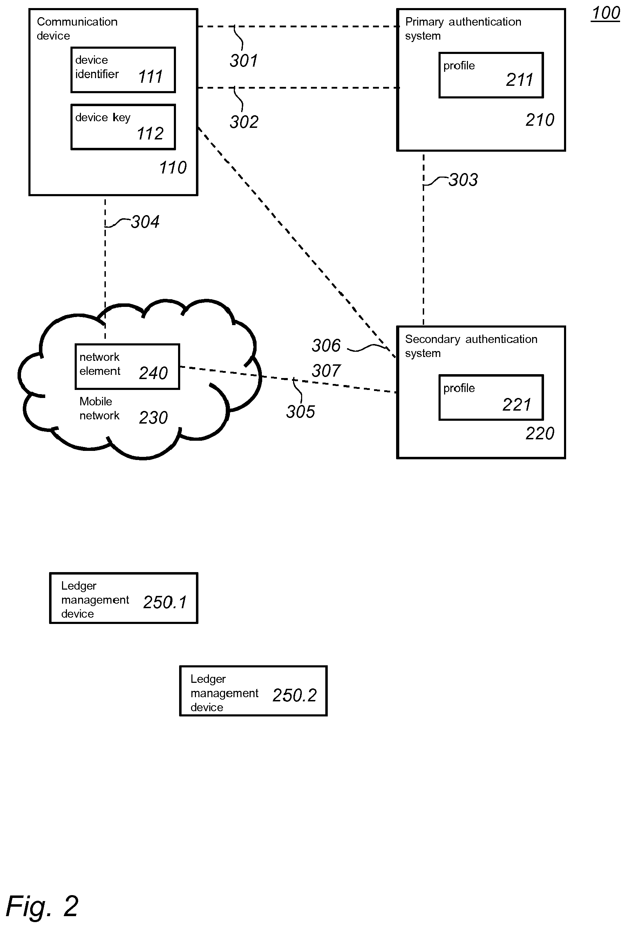

**Figure 2** schematically shows an example of an embodiment of a communication system 100. System 100 comprises a communication device 110 and a primary authentication system 210 which are arranged for the communication device 110 to authenticate itself, in order for it to be allowed access or further access to a mobile network 230. Interestingly communication system 100 allows distributed identity management; although initially communication device 110 is identified by a primary authentication system 210, part or all of the authentication can be delegated to a secondary authentication system 220. Other elements of communication system 100 may be a network element 240, and one or more ledger management devices; figure 2 shows two ledger management devices: ledger management devices 250.1 and 250.2.

The various devices of system 100 communicate with each other using one or more communication media including mobile network 230. The communication media may also include other wired or wireless digital computer networks, e.g., an internet, an intranet, a LAN, a WLAN, etc. For example, mobile network 230 may be 4G or 5G network, etc. The computer network may be wholly or partly wired, and/or wholly or partly wireless. For example, the computer network may comprise Ethernet connections. Communication device 110 may be a user equipment, sometime referred to as a UE. Typically, communication system 100 comprises many communication devices, e.g., like communication device 110. For example, the communication devices may be configured to communication with each other over mobile network 230.

The devices comprise a connection interface which is arranged to communicate with other devices of system 100 as needed. For example, the connection interface may comprise a connector, e.g., a wired connector, e.g., an Ethernet connector, and/or a wireless connector, e.g., an antenna, e.g., a 4G or 5G antenna. For example, communication device 110, network element 240, primary authentication system 210, and optionally secondary authentication system 220 may have a communication interface arranged to communicate through, at least in part, mobile network 230. For example, primary authentication system 210, secondary authentication system 220 and the ledger management devices may communicate over a computer network, e.g., a wired computer network, and have an appropriately arranged communication interface.

Mobile network 230 and or the computer network may comprise additional elements, which are not separately shown in figure 2, e.g., a router, a hub, etc. The communication interfaces in a ledge management device may be arranged to receive transactions for recording in a distributed ledger. Transactions may be digital transactions, e.g., received in electronic form.

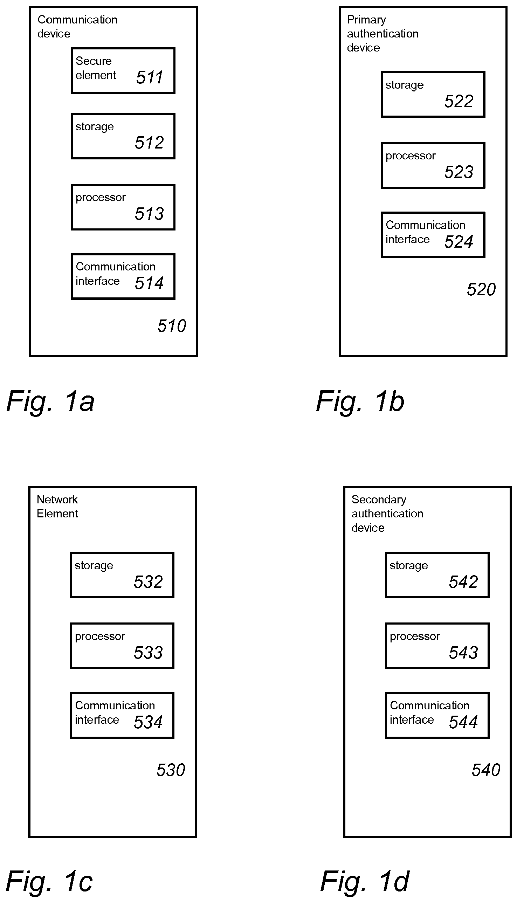

For example, communication device 110 may be a phone for use by a human, or it may be a phone for use in or by a device, e.g., an loT device, a machine, a sensor, and the like. An exemplifying embodiment of communication device 110 is shown in **figure 1a****.** For example, communication device 510 may comprise a secure element 511, storage 512, a processor 513 and a communication interface 514. The secure element is optional, its use is dependent on the use of the communication device 110, and the expected attacks on the system; for example, information stored in the secure element may be stored in storage 512 instead. For example, the secure element may be a smart card, SIM card, or an eSIM, etc. Storage 512 may store computer instructions for execution by processor 513 to configure communication device 510 for a method according to an embodiment. Part of storage 512 may be an electronic memory. Communication interface 514 may be configured to connect to mobile network 230. For example, communication interface 514 may comprise an antenna.

In an embodiment, the secure element is a Smart Card chip, in particular a tamper resistant smart card, that facilitates the secure storage and processing of sensitive credentials, including secret keys. Secure Elements can be available in multiple form factors like Plastic Smartcard, UICC (SIM), eSE, micro SD, etc. For example, a secure element may comprise a processor circuit, e.g., CPU, a memory, possibly including volatile and non-volatile memory. The secure element may run its own operating system independent from the rest of the communication device, and its processor circuit and/or operating system.

It is however also possible for an embodiment not to use a smart card chip, for example, secret keys may be stored in a memory of the communication device, e.g., protected by security measures provided by an operating system of the communication device.

Communication device 110 comprises a cryptographic key, e.g., device key 112. Examples of a cryptographic key, are for example, an LTE Key, sometimes referred to as the user key, abbreviated as Ki. The cryptographic key may be a symmetric key. Communication device 110 may comprise an identity number, e.g., device identifier 111. For example, the device identifier may be an IMSI or SUPI number. For example, device key 112 and/or device identifier 111 may be stored in secure element 511.

**Figure 1b** schematically shows an example of an embodiment of a primary authentication system 520. In this case primary authentication system 520 is embodied in a single device, but system 520 may also be implemented distributed over multiple devices. Primary authentication system 520 comprises a storage 522, processor 523 and a communication interface 524. The storage, part or all of which may be an electronic memory may comprise computer instructions for execution by the processor, to implement a method according to an embodiment.

**Figure 1c** schematically shows an example of an embodiment of a network element 530. Network element 530 comprises a storage 532, processor 533 and a communication interface 534. The storage, part or all of which may be an electronic memory may comprise computer instructions for execution by the processor, to implement a method according to an embodiment.

**Figure 1d** schematically shows an example of an embodiment of a secondary authentication device 540. In this case secondary authentication system 540 is embodied in a single device, but system 540 may also be implemented distributed over multiple devices. Secondary authentication system 540 comprises a storage 542, processor 543 and a communication interface 544. The storage, part or all of which may be an electronic memory may comprise computer instructions for execution by the processor, to implement a method according to an embodiment. The devices and systems 510, 520, 530 and 540 may, e.g., be used in the communication system 100, e.g., as shown in figure 2.

Returning to figure 2. At least two phases can be identified during the operation of communication system 100: a registration phase in which communication device 110 is registered with the secondary authentication system 220, and a use phase in which communication device 110 authenticates itself through secondary authentication system 220 in order to use mobile network 230. Typically, the registration phase is done only once, or once for each secondary authentication system, whereas many use phases my follow a registration phase. During the registration phase, communication device 110 creates a new identity-the public address-which may be used next to or instead of the device identifier. In the use phase, communication device 110 uses the public address to connect to mobile network 230.

For example, a registration phase may start when a communication device 110 is first switched on. A registration phase may also be initiated later, e.g., at communication device 110, or, e.g., primary authentication system 210, to provide new functionality that may be associated with a new identity. A connection is established between communication device 110 and primary authentication system 210, e.g., through mobile network 230.

The initial authentication of communication device 110 may be done in the following way: Communication device 110 authenticates 301 in the mobile network to the primary authentication system 210 using the secret key 112 stored in communication device 110. For example, primary authentication system 210 may store a copy of device key 112 associated with device identifier 111. This step needs to be done only once to activate the user. The device identifier may remain in use even after the second identity, e.g., the public address has been registered. In the latter case, an attach request with the device identifier may be sent by the communication device 110 to primary authentication system 210.

For example, the authentication may be based on a challenge response protocol based on device key 112. The authentication may be mutual authentication. For example, the primary authentication system 210 may receive the device identifier 111 from communication device 110 and retrieve the device key 112 from storage of primary authentication system 210. During normal operation both communication device 110 and authentication system 210 have access to the same device key 112, and can execute a challenge response protocol to authenticate, e.g., from one or both parties to the other.

The primary authentication subsystem may comprise a single device but may also comprise multiple devices; an example, of a primary authentication system is a Home Subscriber Server (HSS), possibly together with a Mobility Management Entity (MME).

For example, a cryptographic function may be applied to a challenge, e.g., a random number and/or a sequence number, using the device key 112 to compute an expected response. The other party proves that it also knows the device key 112 by computing the same response. For example, the primary authentication system may send part or all of a challenge to communication device 110, communication device 110 may compute the response using device key 112, and send the response back. Instead of computing the response, communication device 110 may also invert the cryptographic function, and send the input back, or information depending on the input. Likewise, the primary authentication system may also authenticate itself to the communication device 110.

Authentication to the primary authentication system 210 may be done as described in 3GPP System Architecture Evolution (SAE); Security architecture (3GPP TS 33.401 version 10.3.0 Release 10). For example, a HSS may have a copy of device key 112 and use it to generate one or more authentication vectors. The authentication vectors may include the values RAND, XRES, AUTH_HSS and K_ASME. RAND and AUTH_HSS are forwarded to the phone. Communication device 110 may use AUTH_HSS to authenticate HSS, and computes K_ASME and RES. The value RES is returned to the MME to authenticate the UE

After successful authentication 301 of the communication device 110 to primary authentication system 210 using device key 112, the primary authentication system 210 instructs communication device 110, e.g., a secure element 511, to generate a private and public key pair. Primary authentication system 210 may optionally send communication device 110 a salt which is to be included in the generation of the private and public key pair. For example, a message may be sent from the primary authentication system 210 to communication device 110 to initiate key-pair generation. Generating the key-pair at the communication device 110, and preferably in a secure element thereof, improves security. The public address which the communication device will later use to authenticate to the secondary authentication system 220, is computed from the public key of the key-pair. Typically, the public address will be computed by the communication device 110 itself, but instead the communication device could send the public key so that the primary and/or secondary authentication system can perform the computation themselves, e.g., to verify the public address.

Alternatively, the public/private key pair could be generated external to the communication device, e.g., at the primary or secondary authentication system, after which the key-pair is uploaded to the communication device. This supports lawful impersonation of the communication device.

For example, primary authentication system 210 may comprise a list of device identifiers, for which key pairs need to be generated. Primary authentication system 210 may be configured to verify if the device identifier of communication device 110 is in the list of device identifiers, and if so send a key pair generation request to communication device 110.

Alternatively, communication device 110 could generate a key pair before or during authentication 301, and include the public address in the initial authentication, e.g., in a hello message or an authentication response message. Only if the authentication is successful will the public address be accepted by primary authentication system 210, e.g., stored in primary authentication system 210.

Software to generate the key pair may be installed on a secure element of communication device 110, e.g., on secure element 511. A public address is derived from the public key. The key pair is stored on communication device 110. For example, the private key may be stored on secure element 511, and the corresponding public key may be stored in storage 512 of communication device 110, e.g. outside secure element 511. The public address is typically derived from the public key. For example, a seed may be used to generate a private key, which may be used to generate a public key which may be used to generate a public address. There are a number of ways in which to do this, one of which is, e.g., according to the bitcoin standard, wherein the bitcoin address is used as the public address.

If the key pair is generated successfully, then communication device 110 may generate a success message and may send the public address to primary authentication system 210. Requesting key generation and responding with a public address is shown at 302. For example, the message comprising the public address may be cryptographically bound to device key 112, so that the primary authentication system 210 can verify that it originates with communication device 110. For example, the cryptographic bound may be achieved with a mac over the message computed with the device key 112 or a key derived therefrom, etc.

When primary authentication system 210 receives the public address from communication device 110, primary authentication system 210 may store the public address in a user profile 211 at the primary authentication system 210. User profile 211 may comprise the public address generated by communication device 110. User profile 211 may also comprise the device identifier 111. User profile 211 may also comprise an identifier of the Secondary authentication system (secondary authentication system) which is to perform identity functions for communication device 110. Secondary authentication system 220 may be implemented as a server external to primary authentication system 210. For example, primary authentication system 210 may have a secondary authentication system address associated to the list of device identifiers. For example, the secondary authentication system address may comprise a URL, IP address, or other name convention.

For example, the secondary authentication system may be associated with the list of device identifiers used by primary authentication system 210 to initiate key-pair generation.

Primary authentication system 210 communicates 303 the public address of communication device 110 to a secondary authentication system 220. Device identifier 111 may also be included. The secondary authentication system 220 may be referred to as an identity manager. For example, in an embodiment a party acquires a set of communication devices each with an associated device identifier. The party desires to perform authentication of the devices itself, e.g., to accommodate its own use cases. In this case, both the primary and the secondary authentication device may be provided with a list of device identifiers so that both can verify that they are contacted by a device from the list. In an embodiment, the primary authentication system does not have the list; for example, instead the communication device may request the primary authentication system to forward the public address to the secondary authentication device. An identifier of the secondary authentication device may be provided by the communication device. The secondary authentication system thus knows that the communication device is genuine, since the primary authentication device performed authentication, and it knows that the communication device is from the set of communication devices, e.g., from the device identifier.

In an alternative embodiment, it is the secondary authentication system that does not have a list. In this case, the secondary authentication device does not have the device identifier 111, (nor the device key 112) which improves the privacy of the primary authentication device. Secondary authentication system may also be set-up as a paid service. For example, communication device 110 may desire a further identity, without entrusting the secondary authentication system with its real identity, e.g., its real device identifier 111.

Communicating the information from the primary authentication system to the secondary authentication system may be done in a number of ways, e.g., with direct communication, e.g., over a computer network. For example, the communication between the primary authentication system and the secondary authentication system may be authenticated using a cryptographic authentication protocol, e.g., over a computer network.

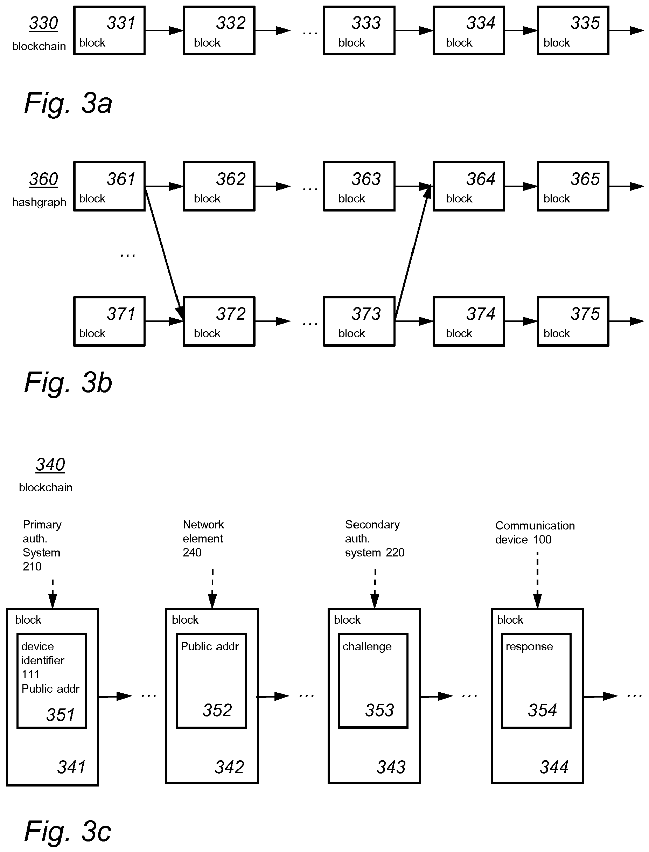

In an embodiment, the public address and (optionally) the device identifier 111 is sent through a distributed ledger from the primary authentication system to the secondary authentication system. Figures 3a and 3b show distributed ledger technologies that are suitable for use with the invention. In a distributed ledger, a database is maintained by multiple ledger maintenance devices. The blocks form a directed graph, since the blocks (excepting the one or more genesis blocks) comprise a reference to one or more previous blocks. The blocks contain so-called transactions, which may comprise information. For example, a transaction may comprise the information that a particular device identifier has been authenticated by primary authentication system 210 and the public address that the corresponding communication device 110 has generated. The transaction may also include an identifier of the intended secondary authentication system 220. The distributed ledger may be received at multiple devices, even device which are not themselves ledger management devices. For example, the secondary authentication system may find a transaction in the ledger which informs him that a new device identifier has registered. Communication through a ledger is indirect, but has the advantage that the ledger can be accessed by other parties as well. Moreover, a dependable, immutable trail of operations on the communication network is created. Which party can access the ledger can be controlled through conventional cryptographic access means.

**Figure 3a** schematically shows an example of an embodiment of a blockchain. Shown in figure 3a are a blockchain 330 and multiple blocks. Shown is a genesis block 331 and subsequent blocks 332-335.

A ledger management device, such as ledger management device 250.1 or 250.2, may comprise a block constructor, a consensus prover and a hash unit. The block constructor may be used to construct, e.g., compute, a new block of the blockchain. Over a communication interface, transactions are received from other elements in system 100, e.g., from the primary authentication system 210.

In addition to collecting the multiple transactions, the block constructor obtains other parts of the new block, e.g., a consensus proof and a reference to a previous block on the block chain. The new block is then assembled from at least the multiple transactions, the consensus proof, and a reference to a preceding block on the blockchain. For example, the reference may be to a last block, e.g., the tail block, of the current blockchain. For example, the current blockchain may be stored on a storage of the ledger management device, although this is not needed. The new block is then communicated to one or more other elements of system 100, in particular to other ledger management devices. For example, figure 3a shows that block 335 refers back to block 334, which refers back to block 333, and so on until genesis block 331.

The consensus prover is arranged to generate a consensus proof over the selected transactions. For example, the ledger management device may compute a hash value over the selected transactions. The hash unit may be configured for a known cryptographic hash function. For example, a hash function from the SHA family, e.g., SHA-256.

The consensus proof may then be computed over the computed hash value or directly over the transactions. Any of the known consensus proofs may be adapted for an embodiment, for example, the consensus proof may comprise a proof of work. For example, the consensus proof may comprise a string *x* so that a hash function computed over string *x* and the hash *s*, e.g., *h*(*x*|*s*), has a particular form, e.g., is below some difficulty target. For example, the consensus proof may comprise consensus from some portion of the network, e.g., it may comprise signatures of one or more further ledger management devices, e.g., ledger management devices. For example, the consensus prover may be arranged to obtain said digital signatures from the other ledger management devices over the digital network. For example, the consensus proof may be required to comprise a signature of at least 51% or more of the ledger management devices. Such signatures may be obtained over a computer network, which may or may not be mobile network 230.

Once the block for the blockchain is completed it may be distributed over system 100, e.g., in a peer to peer fashion. Other blockchain management devices may verify the block and include it in their blockchain. Devices that do not add blocks themselves may also receive the new block. Once further new blocks are added to the blockchain which refer to the new block, the trust in the new block is increased, as it becomes increasingly harder to replace the new block with another block. This feature also resolves races that may occur if two ledger management devices cancel the same block at the same time. Even if parts of system 100 may adopt one version of a next block while another part adopts another version, in time this will be resolved, e.g., using the longest chain rule.

As said, once the new block is finished, e.g., when a consensus proof is available it is distributed, e.g., through a communication interface, e.g., initiated by the block constructor to other devices of system 100. For example, the new block may be sent to other ledger management devices, such as ledger management devices 250.1 and 250.2. The new block will eventually reach all interested parties, e.g., in a peer to peer fashion. For example, the blockchain may be according to "Bitcoin Core version 0.16.0".

**Figure 3b** schematically shows an example of an embodiment of a hashgraph 360. A hashgraph is an alternative distributed ledger which is in many aspects similar to a blockchain. Like a blockchain, a hashgraph also comprises blocks which in turn comprise transactions. The transactions comprise information that needs to be reliably accessible to some parties. Both blockchains and hashgraphs can be public or private. A difference between a hashgraph and a blockchain is that the former does not require a consensus proof. Moreover, there is no need for a longest chain rule to prune the graph. A difference between blockchains and hashgraphs is that blocks in the latter may refer to more than one block. A selection algorithm determines which block and thus which transactions are accepted as the true transactions. The hashgraph may be implemented, e.g., as in the paper "The swirlds hashgraph consensus algorithm: fair, fast, byzantine fault tolerance" by Leemon Baird, swirlds tech report swirlds-tr-2016-01. Shown in the hashgraph are the blocks generated by two nodes, represented as horizontal sequences of blocks 361-365 and the blocks 371-375. In practice there may be more, even many more, nodes than 2. Although blocks can refer to a previous block of the same node, they can also refer to a previous block of a different node, e.g., according to the gossip protocol.

In any case, the ledger management devices together allow that information is stored in a ledger, which can later be retrieved by the same or other devices. Once information is sufficiently embedded in the ledger, it is virtually immutable. New information in a new transaction may update the information though.

Interestingly, inserting the public address in blockchain 340 or hashgraph 360 may be done via executing a smart contract. The smart contract may previously have been stored itself in the ledger.

**Figure 3c** schematically shows an example of an embodiment of a blockchain used for system 100. In this example, the same ledger, in this case a blockchain, is used to store information of various operations performed in system 100. For example, primary authentication system 210 may generate one or more messages with information regarding the authentication of device 110 and its primary address and may send it to secondary authentication system 220. Figure 3c illustrates schematically an embodiment using blockchain 340. For example, primary authentication system 210 may create a transaction 351 comprising the information and send it to a blockchain management device 250.1 for including in blockchain 340. Block 341 comprises a transaction 351. Transaction 351 comprises the device identifier and public address. Secondary authentication system 220 may obtain the information from the blockchain, or otherwise. Transaction 351 may also comprise an identifier of the second authentication system, e.g., an address, so that the correct secondary authentication system 2220 uses the public address. Transaction 351 may also have been posted to a hashgraph rather than a blockchain.

Once secondary authentication system 220 has obtained the information regarding communication device 100, it may store the public address and optionally the device identifier 111 of communication device 110 in a user profile 221. User profile 221 enables secondary authentication system 220 to later authenticate and/or authorize communication device 110 in a subsequent request.

Returning to figure 2. After user profile 221 is created, authentication of communication device 110 may be performed by the secondary authentication system 220 in a use phase. When communication device 110 needs to attach to the network, for example when communication device 110 is switched on, then communication device 110 may generate an attach request. For example, communication device 110 may first establish a connection between the communication device 110 and a network element 240 of the communication network 100. For example, the network element may be comprised in a mobile core network. The attach request comprises at least the public address. The attach request is sent 304 to mobile network 230, e.g., to a network element 240 of network 230.

For example, the network element 240 may be a so-called mobile core (network). For example, the mobile core may comprise multiple parts. For example, using 4G technology, the mobile core may comprise MME, PGW, SGW and using 5G technology this may be AMF, SMF.

Network element 240 obtains the address of secondary authentication system 220. Note that the attach request need not comprise the device identifier 111 of communication device 110, the public address is sufficient.

There are several ways in which network element 240 may obtain the address of secondary authentication system. In a first example, communication device 110 may include the address of secondary authentication system 220 in the attach request. Communication device 110 may have been programmed with it, or it may have received it from the primary authentication device 210. Communication device 110 may also receive the address of the secondary authentication system 220 through an out-of-band channel, e.g., from a user of communication device 110, from a website of secondary authentication system 220, etc.

In a second example, network element 240 may look-up the correct secondary authentication system within system 100, e.g., by contacting primary authentication system 100. For example, network element 240 may send the public address to primary authentication system 210, primary authentication system 210 then retrieves the secondary authentication system address from user profile 211 and sends it to network element 240. For example, the mobile network may download information of users during initial a registration. An advantage of the second example is that it is not dependent on configuration of the communication device.

In a third example, the network element 240 does not know the correct secondary authentication device but broadcasts a request, e.g., on the distributed ledger, so that the correct secondary authentication system can respond. A potential disadvantage is that this may increase response time.

Network element 240 may then forward the attach request to secondary authentication system 220, possibly through intermediate network elements, such as an authentication network. For example, network element 240 may send 305 the public address, e.g., in an authentication request, to secondary authentication system 220, e.g., through a computer network; mobile network 230 may also be used.

Network element 240 is configured to receive the public address from communication device 110 and to send the public address of communication device 110 to the secondary authentication system 220 to request validation. The validation request may be sent in a number of ways, e.g., with direct communication or via inserting the public address in a distributed ledger, e.g., a blockchain or via executing a smart contract. For example, network element 240 may generate a transaction comprising the public address, and send the transaction to a ledger management device, e.g., 250.1 or 250.2. The ledger management device may then generate a new block for inclusion in the distributed ledger, which new block comprises the public address. Figure 3c shows an example of the latter in block 342, comprising transaction 352 posted by network element 240. The secondary authentication system 220 receives the block, in this case from the ledger, and validates the public address in the block. The latter may be done by verifying that a user profile 221 with the public address exists. Secondary authentication system 220 may further impose an additional criterion for access to mobile network 230 as desired. For example, the time of day or the date of the request may be considered, or the amount of data used, or the priority of the device and so on. Interestingly, the criteria for allowing access to mobile network 230 that secondary authentication system 220 imposes can be different from those imposed by primary authentication system 210.

After secondary authentication system 220 validated the public address, a validation response that thus indicates may be sent back to the network element 240. Figure 3c shows an example thereof in block 343 comprising transaction 353 posted by secondary authentication system 220. In this case, transaction 353 comprises a challenge for communication device 110 so that it can prove that it has access to the private key that corresponds to his public address. Having a challenge in transaction 353 is not needed, as the challenge could also be generated by network element 240 itself. Network element 240 may also request the challenge data from secondary authentication system 220.

In any case, secondary authentication system 220 receives the attach request from mobile network 230, e.g., network element 240, and determines if the public address in the attach request corresponds to one of the user profiles. Based on user profile 221, secondary authentication system 220 may create a challenge and communicate 306 the challenge to communication device 110. The latter option is shown in figure 2, however sending the challenge to communication device 110 may also be done through network element 240, which in fact may also generate the challenge.

Another way in which network element 240 may verify the validity of the public address is by directly consulting the ledger, e.g., without posting a transaction or contacting secondary authentication system 220. For example, network element 240 may search in the ledger for a transaction comprising the public address which indicates that the public address is valid. In an embodiment, network element 240 is configured to search in the ledger for a transaction from secondary authentication system 220 that comprises the public address. Alternatively, network element 240 may be configured to search for a transaction comprising the public address, not necessarily from the secondary authentication system 220. For example, network element 240 may first search for a transaction having the public address, and then verify that the transaction originated from a trusted source, e.g., based on a signature on the transaction of the source. Trust in the transaction may also be based on the closed access to the distributed ledger, e.g., without requiring a signature from the secondary authentication system 220 or the like. Requiring the transaction to come from secondary authentication system 220 is especially useful if, e.g., the public address is exclusively used by secondary authentication system 220 and not by another authentication system. An advantage of using the distributed ledger for authentication, is that no communication is needed between network element 240 and second authentication system 220 at the time of the attach request, this saves time. In case the validation of the public address is withdrawn, the secondary authentication system 220 may post a transaction to the ledger containing the public address and an indication of the withdrawal. For example, network element 240 may search for the most recent transaction in the ledger and determine if it allows the public address or if it withdraws authorization. The most recent transaction may also comprise rules from which network element 240 can determine if authentication is now allowed, e.g., the most recent transaction may comprise a time constraint; e.g., no authentication after work-hours.

Regardless of whether the validation is performed by secondary authentication system at the time of the attach request or earlier, e.g., as recorded in a distributed ledger, a next step in verifying the communication device is to perform a challenge response protocol with the communication device 110. Validating the public address with the secondary authentication system may be done in parallel with verifying whether communication device 110 has the corresponding private key, e.g., if network element 240 determines the challenge itself.

For example, a challenge may be generated, e.g., by network element 240 or secondary authentication system 220 and sent to communication device 110.

The challenge may comprise data at least part of which is novel, e.g., contains a nonce, a sequence number, a random number, etc. Communication device 110 may compute a response by computing a signature over the challenge, or over data derived therefrom. The response may also comprise the public key itself. To verify the response the correspondence between the public address and the public key is verified and the signature is verified with the public key. If the public key is the address itself, or if the public key is available from another source, e.g., a public register, then the response does not need to comprise the public key.

The challenge may also be posted to a distributed ledger. For example, the network element 240 or secondary authentication system 220 may be configured to generate a first transaction comprising the public address, and sending the first transaction to a ledger management device 250.1, or 250.2. The ledger management device includes the transaction in the ledger by generating a new block for inclusion in the distributed ledger, which new block comprises the public address. Communication device 110 may receive at least the first transaction, and generate a second transaction referring to the first transaction and send the second transaction to a ledger management device. Interestingly, the first and second transaction may use the same or similar technology as used in a digital currency to transfer the digital currency. For example, the first transaction may comprise a locking script, e.g., a ScriptPubKey, which is locked to the private key of communication device 110. The second transaction may comprise an unlocking script, created with the private key of communication device 110, e.g., a ScriptSig. ScriptPubKey and ScriptSig are examples taken from Bitcoin, but other ways to challenge the possession of a private key may also be used. The second transaction is optional, for example, in an embodiment any of the first transactions as above may be used, but instead of the second transaction the communication device sends a response to the network element or secondary authentication system in another way, e.g., without using the blockchain, e.g., over mobile network to or through the network element.

Interestingly, this may use the same mechanism as in a digital currency. In an embodiment, the network element 240 or the secondary authentication system 220 sends an amount of digital currency to communication device 110, e.g., to the public address of communication device 110. If communication device 110 spends the currency, e.g., returns the digital currency, e.g., to the network element 240 or the secondary authentication system 220 respectively that sent the token, then communication device 110 is authenticated.

Nevertheless, any challenge response protocol may be used to prove that communication network 110 has access to the public key and private key corresponding to the public address.

The challenge may be sent from secondary authentication system 220 to communication device 110, e.g., through mobile network 230. Secondary authentication system 220 may also generate a transaction 353 and send it to a blockchain management device 250 for inclusion in block 343 of blockchain 340. Communication device 110 receives the challenge or obtains it from blockchain 340. For example, communication device 110 may access the blockchain using network element 240 as the intermediate.

Communication device 110 solves the challenge, proving that it has access to the private key that corresponds to the public address. For example, the challenge may comprise the public address, and optionally further information; the response may comprise the public key and a signature over information comprising at least the further information if any.

Communication device 110 communicates 307 the response to the challenge to secondary authentication system 220 who verifies the response. For example, verifying the response may comprise verifying that the public key corresponds to the public address and that the signature is correct for the data and the key. Secondary authentication system 220 may then inform mobile network 230 that communication device 110 is authorized for access to network 230. Responding may be through network element 240, or to network element 240.

Alternatively, communication device 110 may post the response to blockchain 340. For example, a transaction 354 may be generated that refers to transaction 353. Transaction 353 may be locked to the public address of communication device 110. The transaction 354 may unlock transaction 353 using the corresponding private key; that is transaction 354 comprises the response to the challenge posted in transaction 353, which thus proves that communication device 110 is in possession of the private key corresponding to the public address. In this case, secondary authentication system 220 may obtain the response from the blockchain, and send authorization to mobile network 230; possibly through the blockchain. Alternatively, mobile network 230 may obtain the response from the blockchain and give communication device 110 access based thereupon. Using a distributed ledger provides proof that communication device 110 accessed mobile network 230. Network element 240 may post to the distributed ledger a transaction comprising information regarding the access, e.g., an identifier of network element 240.

In different embodiments, distributed ledgers can be used at one or more points in the system. This can be the same distributed ledger or multiple ledgers or even ledgers of multiple types. For example, in an embodiment, a distributed ledger may be used in the registration phase, e.g., by one or both of the primary and secondary authentication system; in the use phase the authentication of the primary and/or of the secondary authentication system can be verified by consulting the distributed ledger. For example, a blockchain type distributed ledger may be used by the primary and secondary authentication system in the registration phase.

In an embodiment, in the use phase, the network element and the secondary authentication system may use a hashgraph type distributed ledger, even if no ledger or a ledger of blockchain type was used in the registration phase.

In an embodiment, the public address is used as an additional set of credentials. The additional set of credentials may be stored in the secure element of a communication device, e.g., in a SIM card/eSIM.

In an embodiment, the second identity can be used by the device to authenticate itself to an external secondary authentication system. For example, the external secondary authentication systems of a 3^{rd} party company may be connected to the authentication network of the primary authentication system. The authentication system may be a distributed ledger based system, e.g., a blockchain based network. For example, the 3^{rd} party company may install and maintain the secondary authentication systems. For example, the secondary authentication system may be implemented as nodes in the authentication network performing the authentication. For example, the nodes may function as ledger management devices as well.

In an embodiment, the second identity can be used to authenticate an additional device, e.g., of the 3^{rd} party company, e.g., a company associated with the secondary authentication system. For example, the main device with the sim card is using the second set of credentials to authenticate a paired device (e.g., like a wearable) to the network.

For example, in an embodiment a further communication device, e.g., a wearable communication device, e.g., installed in a jacket or other garment, establishes communication with a phone of the wearer. The phone registers a public address, e.g., as described herein. The wearable communication device communicates with mobile network 230 using the communication device as a gateway device. The wearable communication device uses the public address as its device identifier. For example, communication device 110 may continue to use the network based on its device identifier and device key, e.g., as is known, but a further communication device uses the new credentials, e.g., the public address and corresponding key-pair. Instead of a wearable communication device the further communication device could be non-wearable.

In the various embodiments, the devices may be provided with an input interface, which may be selected from various alternatives. For example, an input interface may be a network interface to a local or wide area network, e.g., the Internet, a storage interface to an internal or external data storage, a keyboard, etc. For example, the communication device may be provided with a touch screen or a keyboard, etc. For example, the primary and secondary authentication systems and/or the network element could be provided with network interfaces for communication among them. Systems 210 and 220 may be implemented as single devices if desired.

Typically, the devices and/or systems 110, 210, 220 and 240 each comprise a microprocessor (not separately shown) which executes appropriate software stored at the devices and/or systems 110, 210, 220 and 240; for example, that software may have been downloaded and/or stored in a corresponding memory, e.g., a volatile memory such as RAM or a non-volatile memory such as Flash (not separately shown). Alternatively, the devices and/or systems 110, 210, 220 and 240 may, in whole or in part, be implemented in programmable logic, e.g., as field-programmable gate array (FPGA). Devices and/or systems 110, 210, 220 and 240 may be implemented, in whole or in part, as a so-called application-specific integrated circuit (ASIC), e.g., an integrated circuit (IC) customized for their particular use. For example, the circuits may be implemented in CMOS, e.g., using a hardware description language such as Verilog, VHDL etc.

In an embodiment, the devices and/or systems 110, 210, 220 and 240 comprise a processor circuit and a storage circuit to implement a method according to an embodiment. The processor circuit may execute instructions represented electronically in the storage circuits. The circuits may also be, FPGA, ASIC or the like.

An aspect of the invention is a method to authenticate a communication device 110 for a communication network 100. The authentication method comprises a registration part 400 and a use part 500.

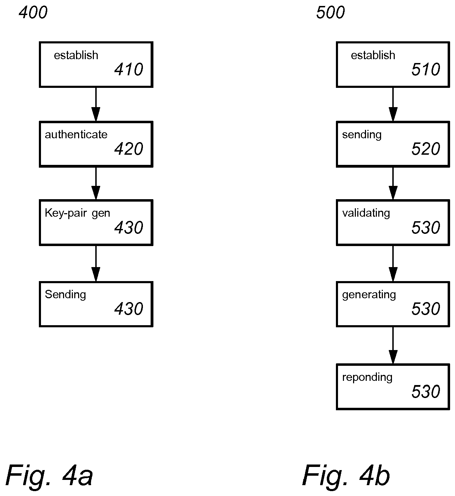

**Figure 4a** schematically shows an example of an embodiment of a registration part 400 of a method to authenticate a communication device for a communication network. Registration part 400 comprises
- establishing 410 a connection between the communication device 110 and a primary authentication system 210, the communication device 110 and the primary authentication system 210 having a shared secret key 112,
- authenticating 420 the communication device 110 to the primary authentication system 210 through a challenge response protocol depending on the key 112.
- generating 430 at the communication device 110 a key-pair having a public key and a private key, and computing a public address from the public key. For example, the primary authentication system 210 may comprise a list of device identifiers. If the device identifier is on the list, the primary authentication system 210 being arranged to request generation of the key-pair and/or send the public address to the secondary authentication system. Alternatively, communication device 110 itself may initiate generating the key-pair and/or request forwarding of the public address to the secondary authentication device. For example, the latter is suitable for commercial services that offer one or more additional identities which may be used when communicating on mobile network 230, e.g., by communication device 110 and/or by devices associated with communication device 110, e.g., wearable electronics.
- sending 440 the public address to a secondary authentication system 220 by the primary authentication system 210.

The secondary authentication system may approve the public address by virtue that it was received from the primary secondary authentication system, but the secondary authentication system may also verify further requirements. For example, the secondary authentication system may verify if the corresponding device identifier is on a pre-approved list of the secondary authentication system, or by counting if the number of approved public addresses is below a maximum, or if the secondary authentication system received a registration request for the device identifier through an out-of-band channel, e.g., over a computer network such as the Internet. For example, a user of communication device 110 may request a new identity through a website associated with the secondary authentication device, and, say, receive a code of the website. When the communication device later registers with the primary authentication device, the code may be sent along with the public address, and later forwarded to the secondary authentication system. After receiving the code by the secondary authentication system, it can approve the public address.

In an embodiment, communication device 110 sends proof with the public address to the primary authentication device that it possesses the private key corresponding to the public address. For example, this may be done by a challenge response protocol between the communication device and primary authentication device. This proof, e.g., the challenge and response may be sent to the secondary authentication system.

One option to send the public address to the secondary authentication system is to use a distributed ledger. For example, this may be done by generating a transaction comprising the public address, and sending the transaction to a ledger management device. The secondary authentication system 220 can then retrieve the public address from the block. Likewise, the secondary authentication system may use a ledger, possibly the same ledger to post a transaction which indicates that it approves the public address. For example, in an embodiment, both the primary and secondary authentication system use a ledger to post a transaction that proves that the primary, respectively, the secondary authentication system approved the public address and thereby the new identity or device identifier. In an embodiment, these ledgers are different; in an embodiment only the secondary authentication device uses a ledger. The latter embodiments have the advantage that access to the ledger, e.g., to verify authorization in a use-phase, does not imply access to the corresponding device identifier, since the secondary authentication system can post a transaction without the device identifier, but comprising the public address and optionally an identifier of the secondary authentication system.

**Figure 4b** schematically shows an example of an embodiment of a use part 500 of a method to authenticate a communication device for a communication network. Use part 500 comprising
- establishing 510 a connection between the communication device 110 and a network element 240 of the communication network 100,
- sending 520 the public address from the communication device 110 to the network element 240
- validating 530 the public address at the secondary authentication system 220. The latter can be done, e.g., by consulting a ledger used by the secondary authentication system. For example, finding a transaction by the network element 240 in the distributed ledger comprising the public address to verify validation of the public address. For example, the secondary authentication system may post a transaction comprising the public address to indicate that the public address is authorized. Later, the authorization may be withdrawn in a later transaction. The transaction may also comprise usage rules, e.g., maximum bandwidth, speed, data limits, usage times, and the like. For example, the public address may be used by a sensor for which data limits and/or speed limits are imposed, so that the public address is useful for sending sensors measurement but is not useful for other communication needs, e.g., browsing the internet. These limits may be set or modified in transactions posted, e.g., by the secondary authentication system, and which may comprise the public address.

Verifying the validation of a public address may be done by directly contacting the secondary authentication system, but may also be done through a distributed ledger. For example, use part may comprise generating a transaction by the network element 240 comprising the public address, and sending the transaction to a ledger management device 250.1, 250.2, the ledger management device generating a new block for inclusion in a distributed ledger, which new block comprises the public address, the secondary authentication system 220 receiving the block, validating the public address in the block, and sending a validation response to the network element 240. The validation response may be communicated back in the form of a transaction posted to the distributed ledger.
- generating 540 a challenge for the communication device,
- responding 550 by the communication device 110 to the challenge with a response computed from the challenge and the private key. For example, the response may be a signature computed with the private key over the challenge, or data derived therefrom. The challenge may comprise a random number, or a nonce, etc., and may be generated at the network element or at the secondary authentication system. Challenging the communication device may be done through a distributed ledger as well. For example, the use part may comprise
- generating a first transaction by the network element 240 or the secondary authentication system 220 comprising the public address, and sending the first transaction to a ledger management device 250.1, 250.2, the ledger management device generating a new block for inclusion in a distributed ledger, which new block comprises the public address,
- the communication device receiving at least the first transaction, and generating a second transaction referring to the first transaction and sending the second transaction to a ledger management device.

Many different ways of executing methods 400 and 500 are possible, as will be apparent to a person skilled in the art. For example, the order of the steps can be varied or some steps may be executed in parallel. Moreover, in between steps other method steps may be inserted. The inserted steps may represent refinements of the method such as described herein, or may be unrelated to the method. For example, parts may be executed, at least partially, in parallel. Moreover, a given step may not have finished completely before a next step is started.

A method according to the invention may be executed using software, which comprises instructions for causing a processor system to perform method 400 or 500. Software may only include those steps taken by a particular sub-entity of the system. The software may be stored in a suitable storage medium, such as a hard disk, a floppy, a memory, an optical disc, etc. The software may be sent as a signal along a wire, or wireless, or using a data network, e.g., the Internet. The software may be made available for download and/or for remote usage on a server. A method according to the invention may be executed using a bitstream arranged to configure programmable logic, e.g., a field-programmable gate array (FPGA), to perform the method.

Such software may be limited to the parts executed by the various parties in system 100, e.g., by communication device 100, primary authentication device 210, secondary authentication device 220, network element 240, and the like.

It will be appreciated that the invention also extends to computer programs, particularly computer programs on or in a carrier, adapted for putting the invention into practice. The program may be in the form of source code, object code, a code intermediate source, and object code such as partially compiled form, or in any other form suitable for use in the implementation of the method according to the invention. An embodiment relating to a computer program product comprises computer executable instructions corresponding to each of the processing steps of at least one of the methods set forth. These instructions may be subdivided into subroutines and/or be stored in one or more files that may be linked statically or dynamically. Another embodiment relating to a computer program product comprises computer executable instructions corresponding to each of the means of at least one of the systems and/or products set forth.

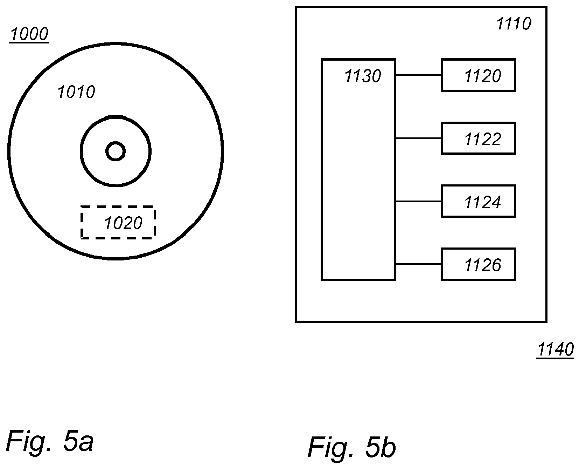

**Figure 5a** shows a computer readable medium 1000 having a writable part 1010 comprising a computer program 1020, the computer program 1020 comprising instructions for causing a processor system to perform an authentication method according to an embodiment. The computer program 1020 may be embodied on the computer readable medium 1000 as physical marks or by means of magnetization of the computer readable medium 1000. However, any other suitable embodiment is conceivable as well. Furthermore, it will be appreciated that, although the computer readable medium 1000 is shown here as an optical disc, the computer readable medium 1000 may be any suitable computer readable medium, such as a hard disk, solid state memory, flash memory, etc., and may be non-recordable or recordable. The computer program 1020 comprises instructions for causing a processor system to perform said authentication method.

**Figure 5b** shows in a schematic representation of a processor system 1140 according to an embodiment of a communication device, primary authentication system, secondary authentication system or network element. The processor system comprises one or more integrated circuits 1110. The architecture of the one or more integrated circuits 1110 is schematically shown in Figure 5b. Circuit 1110 comprises a processing unit 1120, e.g., a CPU, for running computer program components to execute a method according to an embodiment and/or implement its modules or units. Circuit 1110 comprises a memory 1122 for storing programming code, data, etc. Part of memory 1122 may be read-only. Circuit 1110 may comprise a communication element 1126, e.g., an antenna, connectors or both, and the like. Circuit 1110 may comprise a dedicated integrated circuit 1124 for performing part or all of the processing defined in the method. Processor 1120, memory 1122, dedicated IC 1124 and communication element 1126 may be connected to each other via an interconnect 1130, say a bus. The processor system 1110 may be arranged for contact and/or contact-less communication, using an antenna and/or connectors, respectively.

For example, in an embodiment, the device may comprise a processor circuit and a memory circuit, the processor being arranged to execute software stored in the memory circuit. For example, the processor circuit may be an Intel Core i7 processor, ARM Cortex-R8, etc. The memory circuit may be an ROM circuit, or a non-volatile memory, e.g., a flash memory. The memory circuit may be a volatile memory, e.g., an SRAM memory. In the latter case, the device may comprise a non-volatile software interface, e.g., a hard drive, a network interface, etc., arranged for providing the software.

It should be noted that the above-mentioned embodiments illustrate rather than limit the invention, and that those skilled in the art will be able to design many alternative embodiments.

In the claims, any reference signs placed between parentheses shall not be construed as limiting the claim. Use of the verb "comprise" and its conjugations does not exclude the presence of elements or steps other than those stated in a claim. The article "a" or "an" preceding an element does not exclude the presence of a plurality of such elements. The invention may be implemented by means of hardware comprising several distinct elements, and by means of a suitably programmed computer. In the device claim enumerating several means, several of these means may be embodied by one and the same item of hardware. The mere fact that certain measures are recited in mutually different dependent claims does not indicate that a combination of these measures cannot be used to advantage.

In the claims references in parentheses refer to reference signs in drawings of embodiments or to formulas of embodiments, thus increasing the intelligibility of the claim. These references shall not be construed as limiting the claim.

## Claims

1. A method to authenticate a communication device (110) for a communication network (100), the authentication method comprising a registration part and a use part, wherein the registration part comprises
- establishing a connection between the communication device (110) and a primary authentication system (210), the communication device (110) and the primary authentication system (210) having a shared secret key (112),
- authenticating the communication device (110) to the primary authentication system (210) through a challenge response protocol depending on the key (112).
- generating at the communication device (110) a key-pair having a public key and a private key, and computing a public address from the public key,
- sending the public address to a secondary authentication system (220) by the primary authentication system (210),
the use part comprising
- establishing a connection between the communication device (110) and a network element (240) of the communication network (100),
- sending the public address from the communication device (110) to the network element (240)
- validating the public address at the secondary authentication system (220)
- generating a challenge for the communication device,
- responding by the communication device (110) to the challenge with a response computed from the challenge and the private key.

2. An authentication method as in Claim 1, wherein
- sending the public address to a secondary authentication system (220), comprises
- generating a transaction comprising the public address, and sending the transaction to a ledger management device (250.1, 250.2), the ledger management device generating a new block for inclusion in a distributed ledger, which new block comprises the public address,
- the secondary authentication system (220) receiving the block, and retrieving the public address from the block, and/or
- the method comprises
- generating by the secondary authentication system a transaction comprising the public address, and sending the transaction to a ledger management device (250.1, 250.2), the ledger management device generating a new block for inclusion in a distributed ledger, which new block comprises the public address.

3. An authentication method as in any one of the preceding claims, wherein the primary authentication system (210) comprises a list of device identifiers, the primary authentication system (210) being arranged to send the public address to the secondary authentication system if the device identifier (111) of the communication device (110) is on the list.

4. An authentication method as in any one of the preceding claims, wherein the use part comprises
- generating a transaction by the network element (240) comprising the public address, and sending the transaction to a ledger management device (250.1, 250.2), the ledger management device generating a new block for inclusion in a distributed ledger, which new block comprises the public address,
- the secondary authentication system (220) receiving the block, validating the public address in the block, and sending a validation response to the network element (240).

5. An authentication method as in any one of the preceding claims, wherein the use part comprises
- finding a transaction by the network element (240) in the distributed ledger comprising the public address to verify validation of the public address.

6. An authentication method as in any one of the preceding claims, wherein the use part comprises
- generating a first transaction by the network element (240) or the secondary authentication system (220) comprising the public address, and sending the first transaction to a ledger management device (250.1, 250.2), the ledger management device generating a new block for inclusion in a distributed ledger, which new block comprises the public address,
- the communication device receiving at least the first transaction, and optionally generating a second transaction referring to the first transaction and sending the second transaction to a ledger management device.

7. An authentication method as in any one of the preceding claims, wherein the distributed ledger is a blockchain or a hashgraph.

8. A communication device (110) arranged to authenticate for a communication network (100), the communication device comprising
- a communication element configured for establishing a wireless communication over a wireless network,
- a memory arranged to store a secret key, the secret key being shared with a primary authentication system (210)
- a processor configured for a registration part and a use part, the configuration for the registration part comprising
- establishing a connection with the primary authentication system (210),
- authenticating the communication device (110) to the primary authentication system (210) through a challenge response protocol depending on the key (112).
- generating a key-pair having a public key and a private key, and computing a public address from the public key,
- sending the public address to the primary authentication system (210),
the configuration for the use part comprising
- establishing a connection with a network element (240) of the communication network (100),
- sending the public address to the network element (240), the primary authentication system (210) validating the public address at the secondary authentication system (220)
- obtaining a challenge for the public address,
- computing a response from the challenge and the private key, and responding by the communication device (110) to the challenge with the response.

9. A communication device as in claim 8, wherein the challenge is received in a first transaction in a block posted to a distributed ledger, and/or wherein the response is comprised in a second transaction referring to the first transaction, the processor being arranged to send the second transaction to a ledger management device.

10. A primary authentication system (210) for a communication network (100), the primary authentication system (210) comprising
- a communication element configured for establishing a wireless communication over a wireless network,
- a memory arranged to store a secret key, the secret key being shared with a communication device (110),
- a processor configured for a registration part and a use part, the configuration for the registration part comprising
- establishing a connection with the communication device (110)
- authenticating the communication device (110) through a challenge response protocol depending on the key (112).
- receiving from the communication device a public address, the public address being derived from a public key, and sending the public address to a secondary authentication system (220) by the primary authentication system (210).

11. A secondary authentication system to authenticate a communication device (110) for a communication network (100),
- a communication element configured for establishing a communication over a network,
- a processor configured for a registration part and a use part, the configuration for the registration part comprising
- receiving a public address from a primary authentication system (210), the public address being computed from a public key,
the configuration for the use part comprising
- receiving the public address from a network element (220)
- validating the public address.

12. A secondary authentication system as in Claim 11, wherein the processor is configured to
- generate a transaction comprising the public address, and sending the transaction to a ledger management device (250.1, 250.2), the ledger management device generating a new block for inclusion in a distributed ledger, which new block comprises the public address,

13. A network element to authenticate a communication device (110) for a communication network (100),
- a communication element configured for establishing a wireless communication over a wireless network,
- a processor configured for a use part, the configuration for the user part comprising
- establishing a connection with a communication device (110) over the communication network (100),
- receiving a public address from the communication device
- verifying that the public address is validated at a secondary authentication system (220)
- generating or receiving a challenge for the communication device,
- receiving a response from the communication device (110) to the challenge, which response is computed from the challenge and the private key.

14. A network element as in Claim 13, wherein the validating the public address comprising finding a transaction by the network element (240) in the distributed ledger comprising the public address to validate the public address.

15. A computer readable medium comprising transient or non-transient computer instructions arranged to perform any of the preceding methods when the computer program is run on a computer.
